(19) Europäisches Patentamt
European Patent Office
Office européen des brevets

(11) **EP 4 485 021 A2**

(12) **EUROPEAN PATENT APPLICATION**

(43) Date of publication:
**01.01.2025 Bulletin 2025/01**

(21) Application number: **24183564.4**

(22) Date of filing: **20.06.2024**

(51) International Patent Classification (IPC):
**G02B 6/028** (2006.01)   **G02B 6/036** (2006.01)

(52) Cooperative Patent Classification (CPC):
**G02B 6/03633; G02B 6/028**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.06.2023 IN 202311043253**

(71) Applicant: **Sterlite Technologies Limited**
**Gurugram, Haryana 122102 (IN)**

(72) Inventors:
- **MALVIYA, Apeksha**
  **122102 Gurugram (IN)**
- **GUPTA, Priya**
  **122102 Gurugram (IN)**
- **MUNIGE, Srinivas Reddy**
  **122102 Gurugram (IN)**
- **PANDEY, Anand**
  **122102 Gurugram (IN)**

(74) Representative: **Valet Patent Services Limited**
**c/o Caya 83713X**
**Am Börstig 5**
**96052 Bamberg (DE)**

(54) **OPTICAL FIBER CABLE AND OPTICAL FIBER WITH DOUBLE TRENCH**

(57)     The present disclosure relates to an optical fiber (100) having a core region (102) and a cladding (104) defined by a relative refractive index profile (202). Particularly, the relative refractive index profile (202) varies from a center of the core region (102) to a periphery of the cladding (104). Moreover, the relative refractive index profile (202) has at least two low relative refractive index regions (208, 210) such that a relative refractive index at an interface (212, 218) of the at least two low relative refractive index regions (208, 210) is in a range between 0 and -0.1%.

FIG. 1

## Description

## TECHNICAL FIELD

Embodiments of the present disclosure relate to the field of telecommunication fiber, and more particularly, relates to an optical fiber with double trench.

This application claims the benefit of Indian Application No. "202311043253" titled "OPTICAL FIBER CABLE AND OPTICAL FIBER WITH DOUBLE TRENCH" filed by the applicant on June 28, 2023, which is incorporated herein by reference in its entirety.

## Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

Prior art reference US8218929B2 describes an optical fiber having a cladding region surrounding the core region. The cladding includes a first annular region (first trench) surrounding the core region and the second annular region (second trench) surrounding the first annular region such that the mode field diameter of the optical fiber is greater than 13 $\mu$m at 1550 nm wavelength

Another prior art reference WO2021236352A1 describes a single-mode optical fiber having core and cladding regions. The cladding region includes the first depressed index cladding region (first trench region) and the second depressed index cladding region (second trench region).

Yet another prior art reference US11573368B2 describes an optical fiber having a core that is surrounded by a cladding region. The cladding region includes an inner trench region and outer trench region. Both the first and second depressed index cladding regions are doped with down-doped elements. The optical fibers as discussed in the prior art references cannot achieve desired optical properties and are difficult to manufacture. The optical fibers further have buffer region between different layers of the optical fiber, which is not ideal for good optical performance. Also, the presence of the buffer region causes the manufacturing of the optical fiber difficult and complex.

Existing optical fibers have struggled to achieve desired optical properties, face manufacturability issues due to buffer regions, and fail to provide an optimal solution. The identified references (US8218929B2, WO2021236352A1, US11573368B2) illustrate these limitations.

The industry has long sought an optical fiber solution capable of overcoming the challenges posed by existing designs. The existing optical fibers face challenges in achieving desired optical properties, specifically in terms of mode field diameter and manufacturability. The presence of buffer regions between layers complicates manufacturing, hindering optical performance.

However, there are a number of drawbacks of the conventional optical fiber cables in the above stated prior arts. Accordingly, to overcome the disadvantages of the prior art, there is an urgent need for a technical solution that overcomes the above-stated limitations in the prior arts by providing an optical fiber that is capable of solving aforementioned problems of the conventional optical fibers. Thus, the present disclosure proposes an optical fiber with double trench.

## SUMMARY OF THE DISCLOSURE

Embodiments of the present disclosure relates to an optical fiber comprising a core region; and a cladding. In particular, the optical fiber is defined by a relative refractive index profile that varies from a center of the core region to a periphery of the cladding such that the relative refractive index profile has at least two low relative refractive index regions. Moreover, a relative refractive index at an interface of the at least two low relative refractive index regions is in a range between 0 and -0.1 %.

According to the first aspect of the present disclosure,

    (i) a macro bend loss of the optical fiber is less than 0.5 decibel/turn (dB/turn) at 7.5 milli-meter (mm) bend radius and 1550 nanometer (nm) wavelength, and

    (ii) a macro bend loss of the optical fiber is less than 1 dB/turn at 7.5 mm bend radius and 1625 nm wavelength.

According to the second aspect of the present disclosure, the interface of the at least two low relative refractive index regions has a radial thickness between 0 $\mu$m and 0.2 $\mu$m. Particularly, each low relative refractive index region of the at least two low relative refractive index regions have a surface integral volume that differs at least by a multiple of ten. Moreover, each low relative refractive index region of the at least two low relative refractive index regions have a different minimum relative refractive index. Further, the relative refractive index of a first low refractive index region is lower than a relative refractive index of a second low refractive index region.

According to the third aspect of the present disclosure, a first low relative refractive index region is adjacent to the core region and is generated by way of fluorine doping such that a radial thickness of the first low relative refractive index region is less than 6.5 $\mu$m.

In accordance with an embodiment of the present disclosure, the second low relative refractive index region is generated by way of fluorine-doped silica glass tube such that a radial thickness of the second low relative refractive index region is at least two times of a radial thickness of the first low relative refractive index region.

According to the fourth aspect of the present disclosure,

> (i) a first trench volume of a first low relative refractive index region is in a range between 0.5 $\mu m^2$ and 2 $\mu m^2$,
> (ii) a second trench volume of a second low relative refractive index region is in a range between 25 $\mu m^2$ and 35 $\mu m^2$.
> (iii) a first trench alpha of a first low relative refractive index region is in range between 1 and 3, and
> (iv) a second trench alpha of a second low relative refractive index region is in a range between 5 and 7.

According to the fifth aspect of the present disclosure, the optical fiber ribbon comprises a plurality of optical fibers such that each pair of adjacent optical fibers of the plurality of optical fibers are at least one pair of adjacent optical fibers of the plurality of optical fibers are intermittently connected along a length of an optical fiber of the pair of adjacent optical fibers. In particular, at least one optical fiber of the plurality of optical fibers is defined by a relative refractive index profile having two low relative refractive index regions such that a relative refractive index at an interface of the two low relative refractive index regions is in a range between 0 and -0.1 %.

According to the sixth aspect of the present disclosure, each low relative refractive index region of the at least two low relative refractive index regions of the optical fiber have a surface integral volume that differs by at least multiple of ten.

According to the seventh aspect of the present disclosure, each low relative refractive index region of the at least two low relative refractive index regions of the optical fiber have a different minimum relative refractive index such that a relative refractive index of a first low refractive index region is lower than a relative refractive index of a second low refractive index region.

The foregoing objectives of the present disclosure are attained by providing an optical fiber with double trench.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a pictorial snapshot illustrating a cross sectional view of an optical fiber in accordance with an embodiment of the present disclosure;
Fig. 2 is a pictorial snapshot illustrating a graphical representation of a relative refractive index profile of the optical fiber with zero relative refractive index (RI) at an interface between low relative refractive index regions in accordance with an embodiment of the present disclosure;
Fig. 3 is a pictorial snapshot illustrating a graphical representation of another relative refractive index profile of the optical fiber without zero relative refractive index (RI) at an interface between low relative refractive index regions in accordance with an embodiment of the present disclosure;
Fig. 4 is a flowchart illustrating a method for fabricating first and second trenches in the optical fiber in accordance with an embodiment of the present disclosure;
Fig. 5 is a pictorial snapshot illustrating a cross sectional view of an optical fiber cable in accordance with an embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
Term "optical fiber" as used herein refers to a light guide that provides high-speed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

Term "core region" as used herein refers to the inner most cylindrical structure present in the centre of the optical fiber, that is configured to guide the light rays inside the optical fiber.

Term "cladding" as used herein refers to one or more layered structure covering the core of an optical fiber from the outside, that is configured to possess a lower refractive index than the refractive index of the core to facilitate total internal reflection of light rays inside the optical fiber. Further, the cladding of the optical fiber may include an inner cladding layer coupled to the outer surface of the core of the optical fiber and an outer cladding layer coupled to the inner cladding from the outside.

Term "optical fiber cable" as used herein refers to a cable that encloses a plurality of optical fibers.

Term "intermittently bonded ribbon (IBR)" as used herein are the bundles of the optical fibers such that a pair of optical fibers are intermittently bonded along a predefined length of the optical fiber.

Term "trench" as used herein referred to as a down-doped region with a higher down dopant concentration to decrease the refractive index of the down doped region with respect to pure silica and increase the relative refractive index of the core region with respect to the down doped region.

Term "first trench" of the optical fiber as used herein is referred to as a layer surrounding to the core of the optical fiber.

Term "second trench" of the optical fiber as used herein is referred to as a layer surrounding the first trench of the optical fiber.

Term "refractive index" as used herein is referred to as the measure of change of speed of light from one medium to another and is particularly measured in reference to speed of light in vacuum. More specifically, the refractive index facilitates measurement of bending of light from one medium to another medium.

Term "relative refractive index" as used herein is defined as , where ni is maximum refractive index in region i of an optical fiber unless otherwise specified, and n is the average refractive index of an undoped region of the optical fiber. As used herein, the values of the relative refractive index are given in units of "%", unless otherwise specified. In some cases where the refractive index of a region is less than the average refractive index of an undoped region, the relative refractive index percentage is negative, and the region is referred as a trench region.

Term "reduced diameter optical fiber" as used herein refers to an optical fiber as disclosed in the present disclosure having a diameter range of 60 micrometres ($\mu$m) to 125 $\mu$m with a tolerance of $\pm$ 0.7 $\mu$m. Such optical fibers have very less peripheral clad thickness. The reduced diameter optical fibre significantly increases the packing density of the optical fibre cables.

Term "relative refractive index profile ()" of the optical fiber as used herein is referred to as the distribution of relative refractive indexes in the optical fiber from the core to the outmost cladding layer of the optical fiber. Based on the relative refractive index profile, the optical fiber may be configured as a step index fiber. The relative refractive index of the core of the optical fiber is constant throughout the optical fiber and is higher than the relative refractive index of the cladding. Further, the optical fiber may be configured as a graded index fiber, wherein the refractive index of the core gradually varies as a function of the radial distance from the center of the core.

Term "low refractive index" as used herein is defined as adding doping materials to facilitate decrease in the refractive index of a particular layer or part of optical fiber. The materials configured to facilitate down-doping are known as down-dopants.

Term "up doping" as used herein is defined as adding doping materials to facilitate increase in the refractive index of a particular layer or part of optical fiber. The materials configured to facilitate up-doping are known as up-dopants.

Term "core volume" as used herein is defined as a volume acquired by the core with respect to the core radius R1. The core volume may have a magnitude in micrometers square ($\square$m2) that may be determined by the following equation:

$$\int_{R0}^{R1} \square\, \Delta\,(r)\, r\, dr$$

wherein R1 is radius of core.

Term "trench volume" as used herein is defined as a volume (surface integral volume) acquired by a down doped region. The first trench between the core radius R1 and a first trench radius R2 may have a trench volume with a magnitude in □m² that may be determined by the following equation:

$$= \int_{R1}^{R2} \vdots \Delta (r) \, rdr$$

wherein R1 is radius of core,
R2 is first trench radius.

The second trench between the first trench radius R2 and a second trench radius R3 may have a trench volume with a magnitude in □m² that may be determined by the following equation:

$$= \int_{R2}^{R3} \vdots \Delta (r) \, rdr$$

wherein R2 is first trench radius,
R3 is second trench radius.

Term "Mode Field Diameter (MFD)" as used herein refers to the size of the light-carrying portion of the optical fiber. For single-mode optical fibers, this region includes the optical fiber core as well as a small portion of the surrounding cladding glass of the optical fiber. The selection of desired MFD helps to describe the size of the light-carrying portion of the optical fiber.

Term "macro bend loss" as used herein refers to losses induced in bends around mandrels (or corners in installations), generally more at the cable level or for fibers. The macro bend loss occurs when the fiber cable is subjected to a significant amount of bending above a critical value of curvature. The macro bend loss is also called as large radius loss.

Term "micro bend loss" refers to a loss in an optical fiber that relates to a light signal loss associated with lateral stresses along a length of the optical fiber. The micro bend loss is due to coupling from the optical fiber's guided fundamental mode to lossy modes or cladding modes.

Term "Zero Dispersion Wavelength (ZDW)" as used herein refers to a wavelength at which the value of dispersion coefficient is zero. In general, ZDW is the wavelength at which material dispersion and waveguide dispersion cancel one another.

Term "attenuation" as used herein is reduction in power of a light signal as it is transmitted. Specifically, the attenuation is caused by Rayleigh scattering, and absorption of the light signal.

Term "cable cut-off wavelength" as used herein refers to a wavelength above which a single-mode fiber will support and propagate only one mode of light. The optical fiber transmits a single mode of optical signal above a pre-defined cut-off wavelength known as cable cut-off wavelength which is measured on a sample length of 22 meters.

Term "leakage loss" as used herein refers to a loss due to mode leak in an optical fiber that adds to an attenuation of the optical fiber. The Leakage loss is calculated using finite element analysis method where the losses are calculated in the optical fiber in straight condition.

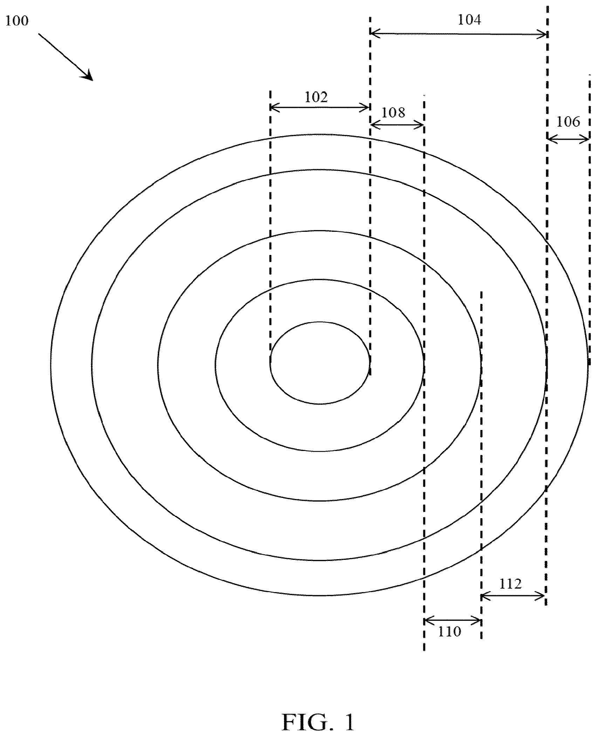

Fig. 1 is a pictorial snapshot illustrating a cross sectional view of an optical fiber in accordance with an embodiment of the present disclosure. The optical fiber 100 may be drawn from an optical fiber preform. The optical fiber 100 may be a single core optical fiber having dual trenches or double trenches. Due to the double trenches, macro bending losses, micro bending losses, leakage losses may be advantageously reduced in the optical fiber 100.

In accordance with an embodiment of the present disclosure, a Mode Field Diameter (MFD) of the optical fiber 100 may be in a range between 8.2 micrometers (μm) and 9.6 μm at 1310 nm wavelength. In particular, the MFD value may be a mean value. In alternate aspects of the present disclosure, the MFD of the optical fiber 100 may be one of 8.5 μm and 9 μm. Aspects of the present disclosure are intended to include and/or otherwise cover any value of the MFD that may lie in a given range of the MFD, without deviating from the scope of the present disclosure.

In accordance with an embodiment of the present disclosure, cable cut-off value of the optical fiber 100 may be less than or equal to 1260 nanometer (nm). Alternatively, the cable cut-off value of the optical fiber 100 may be one of, 1230 nm and 1225 nm. Aspects of the present disclosure are intended to include and/or otherwise cover any cable cut-off value that may be in the given range, without deviating from the scope of the present disclosure.

In accordance with an embodiment of the present disclosure, a Zero Dispersion Wavelength (ZDW) of the optical fiber 100 may be in a range between 1300 nm and 1324 nm. In alternate aspects of the present disclosure, the ZDW of the optical fiber 100 may be either 1316 nm or 1314 nm. Aspects of the present disclosure are intended to include and/or otherwise cover any value of the ZDW that may be in the given range of the ZDW, without deviating from the scope of the present disclosure.

In accordance with an embodiment of the present disclosure, a macro bend loss of the optical fiber 100 may be less than 0.5 decibel/turn (dB/turn) at 7.5 milli-meter (mm) bend radius and 1550 nm wavelength. In alternative embodiments, the macro bend loss may vary.

In other aspects of the present disclosure, a macro bend loss of the optical fiber 100 may be less than 1 dB/turn at 7.5 mm bend radius and 1625 nm wavelength. In alternative aspects of the present disclosure, the macro bend loss of the optical fiber 100 may be one of, 0.19 dB/turn and 0.23 dB/turn at 7.5 mm bend radius and 1625 nm wavelength.

In some other alternate aspects of the present disclosure, the macro bend loss of the optical fiber 100 may be less than 0.5 dB/turn at 7.5 mm bend radius and 1550 nm wavelength. Further, in alternate aspects of the present disclosure, the macro bend loss of the optical fiber 100 may be one of, 0.08 dB/turn and 0.12 dB/turn at 7.5 mm bend radius and 1550 nm wavelength. Aspects of the present disclosure are intended to include and/or otherwise cover any value for the macro bend loss of the optical fiber that may be in the given limits of the 1625 nm and 1550 nm wavelengths, without deviating from the scope of the present disclosure.

In accordance with an embodiment of the present disclosure, the optical fiber 100 may have a core region 102, a cladding 104, and a coating layer 106. In particular, the cladding 104 may have a first clad layer 108, a second clad layer 110, and an outer clad layer 112. Moreover, the core region 102 may be disposed of at a center of the optical fiber 100. Further, the core region 102 may be an up-doping region. The core region 102 may be a region with a high relative refractive index region. Specifically, the core region 102 may be supplemented with a plurality of doping materials (up-dopants) that may facilitate a relative refractive index of the core region 102.

Further, the up-dopant materials may include, but not limited to, Germanium (Ge), Chlorine (Cl). Aspects of the present disclosure are intended to include and/or otherwise cover any type of known and later developed up-dopant materials, without deviating from the scope of the present disclosure.

In accordance with an embodiment of the present disclosure, the core region 102 may have a core volume that may be in a range between 3 micrometer square ($\mu m^2$) and 5 $\mu m^2$. In particular, the core region 102 may further have a core alpha that may be in a range between 3 and 7. Moreover, the core alpha may be defined as variation of refractive index as a function of radius of the core region 102. Further, core alpha is defined as a core shaping parameter. Specifically, the core alpha has a significant impact on how optical signals are distributed inside the core region 102 and thus effects an effective refractive index of a guiding mode in the optical fiber 100. Furthermore, very low core alpha leads to a low effective refractive index of the guiding mode (i.e., poor confinement of the guiding mode) and very high core alpha (i.e., a step index profile) is not possible to manufacture.

In alternative embodiments of the present disclosure, the core alpha may be one of, 4 and 3.5. Aspects of the present disclosure are intended to include and/or otherwise cover any value of the core alpha that may be in the given range of the core alpha, without deviating from the scope of the present disclosure.

The core region 102 may have a core radius (R1) in a range between 3.7 $\mu m$ and 4.5 $\mu m$. In some aspects of the present disclosure, the core radius (R1) may be one of, 3.82 $\mu m$ and 4.3 $\mu m$. Aspects of the present disclosure are intended to include and/or otherwise cover any value of the core radius (R1) that may be in the given range of the core radius (R1), without deviating from the scope of the present disclosure.

In accordance with an embodiment of the present disclosure, the core region 102 may have a relative refractive index that may be in a range between 0.3% and 0.4%.

The cladding 104 may surround the core region 102. In particular, the first clad layer 108 may be positioned adjacent to the core region 102 and may surround the core region 102. The second clad layer 110 may be positioned adjacent to the first clad layer 108 and may surround the first clad layer 108. Further, the outer clad layer 112 may be positioned adjacent to the second clad layer 110 and may surround the second clad layer 110.

In accordance with an embodiment of the present disclosure, the optical fiber 100 may be free of (without) buffer clad region. In particular, the optical fiber 100 may be free of buffer clad region between the first and second clad layers 108 and 110 and the core region 102 and the first clad layer 108. Since, the buffer clad region is absent in the optical fiber 100, therefore, the optical fiber 100 may have a good optical performance. Absence of the buffer clad region may further facilitate a decrease in the number of steps in manufacturing the optical fiber 100 and thereby making the manufacturing process of the optical fiber 100 easier. Elimination of the buffer clad region may advantageously reduce costs associated with manufacturing of the optical fiber 100 and thereby making the usage of the optical fiber 100 economical.

In accordance with an embodiment of the present disclosure, the outer clad layer 112may have a third radius (R4) in a range between 62.15 $\mu m$ and 62.85 $\mu m$. The cladding 104 may have a diameter that may be in a range between 60 $\mu m$ and 125 $\mu m$ with a tolerance value of $\pm$ 0.7 $\mu m$ i.e., 125 $\pm$ 0.7 $\mu m$.

In alternative embodiments of the present disclosure, the third radius (R4) may be less than or equal to 50 $\pm$ 0.7 $\mu m$.

In yet alternative embodiments of the present disclosure, the third radius (R4) may be less than or equal to 40 $\pm$ 0.7 $\mu m$. In some aspects of the present disclosure, the third radius (R4) may be less than or equal to 30 $\pm$ 0.7 $\mu m$. Aspects of the present disclosure are intended to include and/or otherwise cover any value of the third radius (R4), without deviating from the scope of the present disclosure.

In accordance with an embodiment of the present disclosure, the outer clad layer 112 may have a relative refractive index that may be in a range between -0.01 % and 0.01%. In some aspects of the present disclosure, the relative refractive index of the outer clad layer 112 may be 0. In particular, the outer clad layer 112 may be made up of a material, including but not limited to, silica. Aspects of the present disclosure are intended to include and/or otherwise cover any type of known and later developed material for the outer clad layer 112, without deviating from the scope of the present disclosure.

In accordance with an embodiment of the present disclosure, the coating layer 106 may be disposed over the cladding 104. The coating layer 106 may have a diameter that may be in a range between 140 $\mu$m and 250 $\mu$m and a thickness that may be less than or equal to 65 $\mu$m.

In accordance with an embodiment of the present disclosure, the optical fiber 100 may be coated with a single coating layer i.e., the coating layer 106 may have a sufficient tensile strength and sufficient rigidity. In particular, the coating layer 106 may further provide enough cushioning to the optical fiber 100, which prevents any type of damage of the optical fiber 100. Thus, the optical fiber 100 with only one coating layer i.e., the coating layer 106 may facilitate to manufacture an ultra-reduced diameter of the optical fiber 100 such that the optical fiber 100 may have a diameter that may be less than 140 $\mu$m.

In accordance with an embodiment of the present disclosure, a diameter of the optical fiber 100 coated with the coating layer 106 may be less than or equal to one of, 125 $\mu$m and 180 $\mu$m, 160 $\mu$m and 200 $\mu$m. In some alternative aspects of the present disclosure, the diameter of the optical fiber 100 coated with the coating layer 106 may be less than 250 $\mu$m.

In accordance with an embodiment of the present disclosure, the optical fiber 100 may be coated with three coating layers i.e., a first coating layer, a second coating layer, and a colored coating layer. In particular, the first coating layer may be adjacent to the cladding 104 and may be coated over the cladding 104. Moreover, the second coating layer may be adjacent to the first coating layer and may be coated over the first coating layer. And, the colored coating layer may be adjacent to the second coating layer and may be coated over the second coating layer. Aspects of the present disclosure are intended to include and/or otherwise cover any number of coating layers, for example, 1, 2, 3, 4, 5, and so on, without deviating from the scope of the present disclosure.

In some alternative aspects of the present disclosure, the optical fiber 100 may be coated with two coating layers i.e., the first coating layer and the second coating layer such that the second coating layer may be the colored coating layer. In some aspects of the present disclosure, a Young's modulus of the first coating layer may be less than 0.5 Mega Pascal (MPa). In some aspects of the present disclosure, the Young's modulus of the second coating layer may be less than 1500 MPa.

In accordance with an embodiment of the present disclosure, the optical fiber 100 may have a glass diameter that may be 80 $\mu$m and the third radius (R4) may be 40 $\mu$m. In some other aspects of the present disclosure, the optical fiber 100 may have the glass diameter that may be 100 $\mu$m and the third radius (R4) may be 50 $\mu$m.

In accordance with an embodiment of the present disclosure, the optical fiber 100 may be a reduced diameter fiber to effectively optimize material and thickness of the coating layer 106 to achieve desired optical properties of the optical fiber 100.

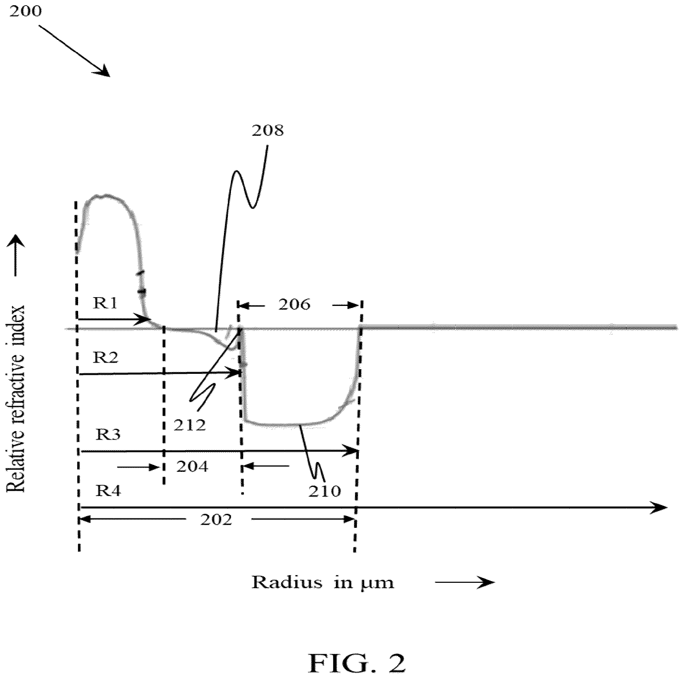

Fig. 2 is a pictorial snapshot illustrating a graphical representation of a relative refractive index profile of the optical fiber with zero relative refractive index (RI) at an interface between low relative refractive index regions in accordance with an embodiment of the present disclosure. In particular, the cladding 104 may be defined by the relative refractive index profile 202 that may vary from a center of the core region 102 to a periphery of the cladding 104. In particular, the relative refractive index profile 202 may have a first relative refractive index profile 204 and a second relative refractive index profile 206. Moreover, the first clad layer 108 may have the first relative refractive index profile 204 and the second clad layer 110 may have the second relative refractive index profile 206.

In accordance with an embodiment of the present disclosure, the relative refractive index profile 202 may have at least two low relative refractive index regions 208 and 210 i.e., a first low relative refractive index region 208 (hereinafter referred to and designated as "the first trench 208") and second low relative refractive index region 210 (hereinafter referred to and designated as "the second trench 210"). In particular, the first relative refractive index profile 204 may have the first trench 208 and the second relative refractive index profile 206 may have the second trench 210 such that the first and second trenches 208 and 210 may be doped with a down dopant such as fluorine.

The first trench 208 may be generated as a continuous trench and may be adjacent to the core region 102. In particular, the first trench 208 may be generated by way of fluorine doping such that a radial thickness of the first trench 208 may be less than 6.5 $\mu$m. Moreover, the fluorination may be performed by performing doping of fluorine on a core soot to generate a small depressed cladding (i.e., the first trench 208) adjacent to the core region 102 using deposition process and sintering process while manufacturing of the core preform. Aspects of the present disclosure are intended to include and/or otherwise cover any method of generating the first trench 208.

The core preform may be used for manufacturing of the optical fiber preform. The first trench 208 may have a first trench volume and a first trench alpha. In particular, the first trench volume may be in a range between 0.5 $\mu$m$^2$ and 2 $\mu$m$^2$ and the first trench alpha may be in a range between 1 and 3. Further, the first trench alpha may be defined as a variation in relative refractive index as function of radius of the first trench 208. Furthermore, the first trench 208 may further have a relative refractive index that may be in a range between -0.02% and -0.08%. The first trench 208 may advantageously ensure good confinement along with improved micro bend associated with the optical fiber 100.

In accordance with an embodiment of the present disclosure, the first trench 208 may have a first radius (R2) in a range between 9 $\mu$m and 12 $\mu$m. In alternative aspects of the present disclosure, the first radius (R2) may be one of, 9.3 $\mu$m and 9.4 $\mu$m. Aspects of the present disclosure are intended to include and/or otherwise cover any value of the first radius (R2) that may be in the given range of the first radius (R2), without deviating from the scope of the present disclosure.

In some preferred aspects of the present disclosure, the first trench alpha may be one of, 1.2 and 1.4. Aspects of the present disclosure are intended to include and/or otherwise cover any value of the first trench alpha that may be in the given range of the first trench alpha (i.e., 1 and 3), without deviating from the scope of the present disclosure.

The second trench 210 may be adjacent to the first trench 208 and may surround the first trench 208. The second trench 210 may be generated by way of fluorine-doped silica glass tube such that a radial thickness of the second trench 210 may be at least two times of the radial thickness of the first trench 208.The second trench 210 may be generated by way of rod-in-cylinder (RIC) technique that require a fluorine-doped silica glass tube in which a fluorinated core rod may be inserted and then collapsed in a cylindrical cladding. Aspects of the present disclosure are intended to include and/or otherwise cover any method of generating the second trench 210.

Further, the second trench 210 have a second trench volume and a second trench alpha. The second trench alpha may be defined as variation in relative refractive index as function of radius of the second trench 210. The second trench volume be in a range between 25 $\mu$m$^2$ and 35 $\mu$m$^2$ and the second trench alpha may be in a range between 5 and 7. The second trench 210 may further have a relative refractive index that may be in a range between -0.25% and -0.35%. The second trench 210 may advantageously ensure reduction in the macro bend.

In accordance with an embodiment of the present disclosure, the second trench 210 may have a second radius (R3) in a range between 16 $\mu$m and 22 $\mu$m. In some alternative of the present disclosure, the second radius (R3) may be one of, 17 $\mu$m and 19 $\mu$m. Aspects of the present disclosure are intended to include and/or otherwise cover any value of the second radius (R3) that may be in the given range of the second radius (R3), without deviating from the scope of the present disclosure.

In accordance with an embodiment of the present disclosure, the second trench alpha may be 6. Aspects of the present disclosure are intended to include and/or otherwise cover any value of the second trench alpha that may be in the given range of the second trench alpha (i.e., 5 and 7), without deviating from the scope of the present disclosure.

The first and second trenches 208 and 210 may advantageously reduce the macro bend losses, the micro bend losses, and the leakage losses in the optical fiber 100. The optical fiber 100 may therefore be advantageously suitable for intermittently bonded ribbon (IBR) cables as the first and second trenches 208 and 210 may advantageously increase fiber density in the IBRs because of low micro bend losses of the optical fiber 100.

In accordance with an embodiment of the present disclosure, the first and second trenches 208 and 210 may define an interface 212 such that a relative refractive index at the interface 212 may be in a range between 0 and -0.1 %. In particular, the interface 212 may be defined between the first trench 208 and the second trench 210 such that the relative refractive index at the interface 212 of the first and second trenches 208 and 210 may be in a range between 0 and -0.1 %.

In accordance with an embodiment of the present disclosure, the first and second trenches 208 and 210 separated the interface 212 that may be a zero (0) relative refractive index region. The zero relative refractive index region at the interface 212 may have a radial thickness that may be in a range between 0 $\mu$m and 0.2 $\mu$m.

In accordance with an embodiment of the present disclosure, each trench of the first and second trenches 208 and 210 may have a surface integral volume that may differ by at least multiple of ten. Further, each trench of the first and second trenches 208 and 210 may have a different minimum relative refractive index. In some alternative aspects of the present disclosure, the relative refractive index of the first trench 208 (*i.e., first low refractive index region*) is lower than the relative refractive index of the second trench 210 (i.e., second low refractive index region).

In accordance with an embodiment of the present disclosure, for the optical fiber 100, the core volume (in percentage) may be in a range between 3 $\mu$m$^2$ and 5 $\mu$m$^2$, the first trench volume (in percentage) may be in a range between 0.5 $\mu$m$^2$ and 2 $\mu$m$^2$, and the second trench volume (in percentage) may be in a range between 25 $\mu$m$^2$ and 35 $\mu$m$^2$. Alternatively, for the optical fiber 100, the core volume (in percentage) may be 3.15 $\mu$m$^2$, the first trench volume (in percentage) may be 1.25 $\mu$m$^2$, and the second trench volume (in percentage) may be 28.8 $\mu$m$^2$. Further, in alternative the present disclosure, for the optical fiber 100, the core volume (in percentage) may be 4.28 $\mu$m$^2$, the first trench volume (in percentage) may be 0.5 $\mu$m$^2$, and the second trench volume (in percentage) may be 29 $\mu$m$^2$.

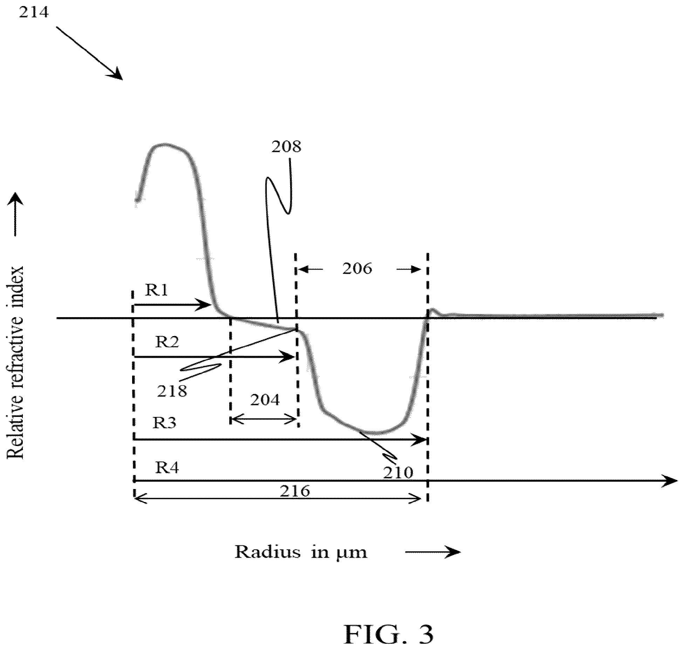

Fig. 3 is a pictorial snapshot illustrating a graphical representation of another relative refractive index profile of the optical fiber without zero relative refractive index (RI) at an interface between low relative refractive index regions in accordance with an embodiment of the present disclosure. The relative refractive index profile 216 may be same or substantially similar to the relative refractive index profile 202. In particular, the relative refractive index profile 216 may not have the zero (0) relative refractive index at the interface 218. For sake of brevity, the same reference numerals have been used for the relative refractive index profile 216 as being used for the relative refractive index profile 202 in FIG. 2.

In accordance with an embodiment of the present disclosure, the interfaces 212 or 218 may have a radial thickness that may be in a range between 0 $\mu$m and 0.2 $\mu$m. Alternatively, the interfaces 212 or 218 may have a radial thickness that may be equal to 0.1 $\mu$m such that the relative refractive index at the interface 218 may be equal to 0.05%. Further, the interfaces 212 or 218 may have a radial thickness that may be equal to 0.2 $\mu$m such that the relative refractive index at the interface 218 may be equal to 0.1%.

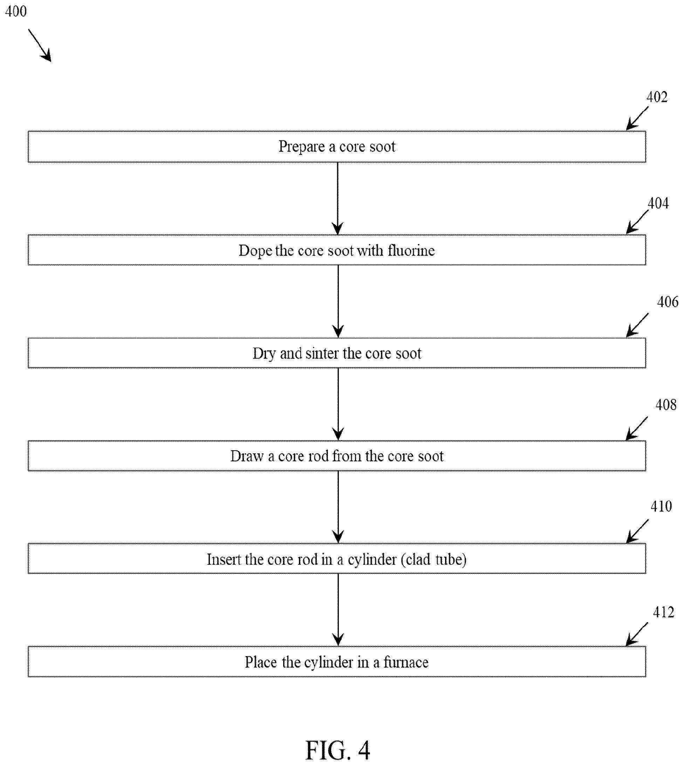

Fig. 4 is a flowchart illustrating a method for fabricating first and second trenches in the optical fiber in accordance with an embodiment of the present disclosure.

At step 402, a core soot having two regions is prepared. In particular, one region may be an up doped region (for example Germanium (Ge) doped region) and another region may be a pure silica region.

At step 404, the core soot is doped. In particular, the pure silica region of the core soot may be doped with fluorine (F) to form the first trench 208. In particular, the pure silica region of the core soot may be doped with fluorine at a predefined temperature. Moreover, the pure silica region of the core soot may be doped by way of an outside vapor deposition (OVD), vapor axial deposition (VAD), modified chemical vapor deposition (MCVD) or plasma activated chemical vapor deposition (PCVD) technique. Aspects of the present disclosure are intended to include and/or otherwise cover any deposition technique to dope the pure silica region of the core soot with fluorine, without deviating from the scope of the present disclosure.

At step 406, the core soot is dried and sintered. In particular, the core soot may be dried and sintered in a sinter furnace to obtain a core preform with a small trench. Moreover, the core soot may be dried and sintered in two separate furnaces. For example, the core soot may be dried in a drying furnace and the core soot may be sintered in a sinter furnace.

At step 408, a core rod is drawn from the core soot. Particularly, the core rod may be up-doped and may have a small trench. The core rod may be up-doped with the up-dopant materials. In particular, the up-dopant materials may include, but not limited to, Germanium (Ge), Chlorine (Cl). Aspects of the present disclosure are intended to include and/or otherwise cover any type of known and later developed up-dopant materials, without deviating from the scope of the present disclosure.

At step 410, the core rod is inserted in a hollow glass cylinder (clad tube) to form an optical fiber preform assembly. The hollow glass cylinder may be a fluorine doped glass cylinder.

At step 412, the optical fiber preform assembly may be placed in a furnace. In particular, the optical fiber preform assembly may be placed in the furnace, for collapsing, to obtain the optical fiber preform. In order to draw the optical fiber having the dual trench, the bottom of the optical fiber preform may be melted. Further, the furnace may be maintained at a temperature that may be in a range between 1650 Degrees Celsius and 2200 Degrees Celsius

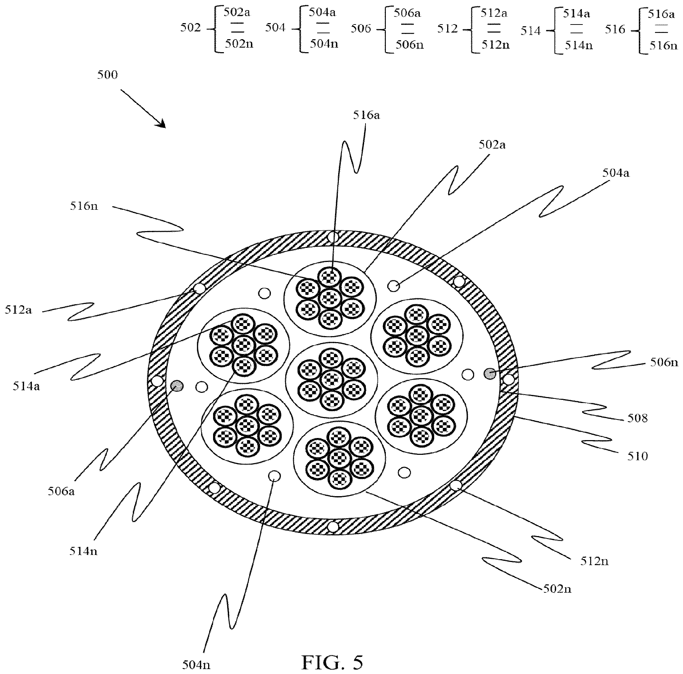

Fig. 5 is a pictorial snapshot illustrating a cross sectional view of an optical fiber cable in accordance with an embodiment of the present disclosure. The optical fiber cable 500 may be installed through various aerial overhead poles or laid inside various ducts that may be used in different applications. In particular, the optical fiber cable 500 may have a plurality of buffer tubes 502a-502n (hereinafter collectively referred to and designated as "the buffer tubes 502"), a plurality of water swellable yarns 504a-504n (hereinafter collectively referred to and designated as "the water swellable yarns 504"), a plurality of ripcords 506a-506n (hereinafter collectively referred to and designated as "the ripcords 506"), a first sheath layer 508, a second sheath layer 510, and a plurality of strength members 512a-512n (hereinafter collectively referred to and designated as "the strength members 512").

In accordance with an embodiment of the present disclosure, the buffer tubes 502, the water swellable yarns 504, and the ripcords 506 may be disposed within the optical fiber cable 500. In particular, the first and second sheath layers 508 and 510 may define a periphery of the optical fiber cable 500. Moreover, the first sheath layer 508 may define an inner periphery of the optical fiber cable 500 and the second sheath layer 510 may define an outer periphery of the optical fiber cable 500.

In accordance with an embodiment of the present disclosure, the water swellable yarns 504 may be disposed around the buffer tubes 502. Each water swellable yarn of the water swellable yarns 504 may be a super absorbent polymer impregnated high tenacity polyester fiber base swellable yarn. The water swellable yarns 504 may be adapted to block water to enter in the buffer tubes 502. Specifically, the water swellable yarns 504 may provide water resistance to the buffer tubes 502 over a longer period of time. The water swellable yarns 504 may therefore facilitate complete water insulation and may protect the buffer tubes 502 against water ingression.

In accordance with an embodiment of the present disclosure, the ripcords 506 may be disposed near to the periphery of the optical fiber cable 500. In particular, the ripcords 506 may be disposed near to the inner periphery of the optical fiber cable 500. Moreover, the ripcords 506 may be disposed adjacent to the first sheath layer 508 such that the first sheath layer 508 encloses the ripcords 506. Further, the ripcords 506 may be adapted to tear apart the first and second sheath layers 508 and 510 to facilitate access of the buffer tubes 502 that may be enclosed inside the optical fiber cable 500. Furthermore, each ripcord of the ripcords 506 may be made up of a material such as but not limited to, aramid yarn, fiberglass epoxy, and steel. Aspects of the present disclosure are intended to include and/or otherwise cover any type of material for each ripcord of the ripcords 506, without deviating from the scope of the present disclosure.

In accordance with an embodiment of the present disclosure, the second sheath layer 510 may surround the first sheath layer 508. In particular, the strength members 512 may be disposed between the first sheath layer 508 and the second sheath layer 510. Moreover, the strength members 512 provide the required tensile strength and stiffness to the optical fiber cable 500. Further, each strength member of the strength members 512 may be made up of but not limited to, a reinforced aramid yarn, a reinforced glass yarn, and steel. Aspects of the present disclosure are intended to include and/or otherwise cover any type of material for each strength member of the strength members 512, without deviating from the scope of the present disclosure.

In accordance with an embodiment of the present disclosure, the first and second sheath layers 508 and 510 may be made up of but not limited to, polyethylene, thermoplastic polyurethane, low smoke zero halogen (LSZH), and the like. Aspects of the present disclosure are intended to include and/or otherwise cover any type of material for the first and second sheath layers 508 and 510, without deviating from the scope of the present disclosure.

In accordance with an embodiment of the present disclosure, each buffer tube of the buffer tubes 502 may have a plurality of optical fiber ribbons 514a-514n (hereinafter collectively referred to and designated as "the optical fiber ribbons 514" and individually referred to and designated as "the optical fiber ribbon 514a"). In alternate aspects of the present disclosure the optical fiber cable 500 may be free of buffer tubes and the plurality of optical fiber ribbons 514a-514n are placed directly inside the sheath having one or more sheath layers 508 and 510.

In accordance with an embodiment of the present disclosure, the optical fiber ribbons 514 may be twisted spirally. Each optical fiber ribbon 514a of the optical fiber ribbons 514 may have a plurality of optical fibers 516a-516n (hereinafter collectively referred to and designated as "the optical fibers 516"). In particular, each pair of adjacent optical fibers of the optical fibers 516 may be at least intermittently connected along a length of an optical fiber of the pair of adjacent optical fibers of the optical fibers 516. Moreover, each optical fiber of the optical fibers 516 may be defined by the relative refractive index profile 202. Further, the relative refractive index profile 202 may have two low relative refractive index regions 208, 210 that may define an interface 212 or 218 such that a relative refractive index at the interface 212 or 218 of the two low relative refractive index regions 208, 210 may be in a range between 0 and -0.1%.

In accordance with an embodiment of the present disclosure, each optical fiber of the optical fibers 516 may be same or substantially similar to the optical fiber 100, in terms of structural and functional aspects in context of the present disclosure.

In accordance with an embodiment of the present disclosure, each buffer tube of the buffer tubes 502 may be made up of but not limited to, polybutylene terephthalate (PBT). Aspects of the present disclosure are intended to include and/or otherwise cover any type of material for each buffer tube of the buffer tubes 502, without deviating from the scope of the present disclosure.

In accordance with an embodiment of the present disclosure, the optical fiber 100 comprises: a core region 102; and a cladding 104 where the optical fiber 100 is defined by a relative refractive index profile 202 that varies from a center of the core region 102 to a periphery of the cladding 104 such that the relative refractive index profile where trench volume of a first low relative refractive index region 208 is at least 10 times less than trench volume of a second low relative refractive index region 210. The optical fiber further includes a relative refractive index at an interface 212, 218 of the at least two low relative refractive index regions 208, 210 is in a range between 0 and -0.1 %.

In accordance with an embodiment of the present disclosure, at least one of (i) a macro bend loss of the optical fiber 100 is less than 0.5 decibel/turn (dB/turn) at 7.5 milli-meter (mm) bend radius and 1550 nanometer (nm) wavelength, and (ii) a macro bend loss of the optical fiber 100 is less than 1 dB/turn at 7.5 mm bend radius and 1625 nm wavelength.

In accordance with an embodiment of the present disclosure, the interface 212, 218 of the at least two low relative refractive index regions 208, 210 has a radial thickness between 0 $\mu$m and 0.2 $\mu$m.

In accordance with an embodiment of the present disclosure, the relative refractive index of a first low refractive index region 208 is lower than a relative refractive index of a second low refractive index region 210.

In accordance with an embodiment of the present disclosure,

(i) a first trench alpha of a first low relative refractive index region 208 is in range between 1 and 3, and
(ii) a second trench alpha of a second low relative refractive index region 210 is in a range between 5 and 7.

The optical fiber design that improves packing efficiency, optical performance, improved macro bend loss, simplified manufacturing without buffer regions, and a refractive index profile. These advancements position our invention as a superior solution to the drawbacks of conventional optical fibers. The optical fiber with enhanced macro bend loss characteristics, simplified manufacturing processes, and an improved refractive index profile. These benefits contribute to the overall efficiency and performance of optical communication systems.

The refractive index profile with at least two low-index regions, achieving desired optical properties, and eliminating buffer regions for simplified manufacturing. The refractive index profile ensures optimal optical properties, reducing macro bend losses, while the absence of buffer regions simplifies manufacturing. These features collectively enable our optical fiber to deliver superior performance and overcome the challenges posed by existing solutions.

In real-world scenarios, the optical fiber can be deployed in telecommunications and data transmission systems, providing efficient and reliable communication. The improved macro bend loss characteristics make it suitable for applications where space constraints and bending requirements are critical.

The broader applicability of the optical fiber extends to various optical communication systems, ensuring efficient data transmission in a range of scenarios. The inventive aspects encompass a refractive index profile design, manufacturing simplifications, and enhanced macro bend loss characteristics, contributing to a versatile solution.

Advantageously, in the optical fiber 100, macro bend losses, micro bend losses, and leakage losses are substantially reduced by virtue of the first and second trenches 208 and 210. The first and second trenches 208 and 210 may facilitate easy fabrication or manufacturing of the optical fiber 100, without much cost involved and thereby enabling the manufacturing of the optical fiber 100 economical. By virtue of the first and second trenches 208 and 210, the fiber density in the optical fiber cable 500 may be increased. Further, by virtue of the first and second trenches 208 and 210, the diameter of the optical fiber cable 500 may be reduced. Furthermore, by virtue of the first and second trenches 208 and 210, the optical fiber cable 100 may be easy to manufacture.

**Claims**

1.  An optical fiber (100) **characterized in that**:

    a core region (102); and
    a cladding (104),
    wherein the optical fiber (100) is defined by a relative refractive index profile (202) that varies from a center of the core region (102) to a periphery of the cladding (104) such that the relative refractive index profile (202) has at least two low relative refractive index regions (208, 210); and
    wherein a relative refractive index at an interface

(212, 218) of the at least two low relative refractive index regions (208, 210) is in a range between 0 and - 0.1 %.

2.  The optical fiber (100) of claim 1, wherein at least one of

    (i) a macro bend loss of the optical fiber (100) is less than 0.5 decibel/turn (dB/turn) at 7.5 millimeter (mm) bend radius and 1550 nanometer (nm) wavelength, and
    (ii) a macro bend loss of the optical fiber (100) is less than 1 dB/turn at 7.5 mm bend radius and 1625 nm wavelength.

3.  The optical fiber (100) of claim 1, wherein the interface (212, 218) of the at least two low relative refractive index regions (208, 210) has a radial thickness between 0 $\mu$m and 0.2 $\mu$m.

4.  The optical fiber (100) of claim 1, wherein each low relative refractive index region of the at least two low relative refractive index regions (208, 210) have a surface integral volume that differs at least by a multiple of ten.

5.  The optical fiber (100) of claim 1, wherein each low relative refractive index region of the at least two low relative refractive index regions (208, 210) have a different minimum relative refractive index.

6.  The optical (100) of claim 1, wherein a relative refractive index of a first low refractive index region (208) is lower than a relative refractive index of a second low refractive index region (210).

7.  The optical fiber (100) of claim 1, wherein a first low relative refractive index region (208) is adjacent to the core region (102) and is generated by way of fluorine doping such that a radial thickness of the first low relative refractive index region (208) is less than 6.5 $\mu$m.

8.  The optical fiber (100) of claim 1, wherein the second low relative refractive index region (210) is generated by way of fluorine-doped silica glass tube such that a radial thickness of the second low relative refractive index region (210) is at least two times of a radial thickness of the first low relative refractive index region (208).

9.  The optical fiber (100) of claim 1, wherein

    (i) a first trench volume of a first low relative refractive index region (208) is in a range between 0.5 $\mu$m$^2$ and 2 $\mu$m$^2$,
    (ii) a second trench volume of a second low relative refractive index region (210) is in a range

between 25 $\mu m^2$ and 35 $\mu m^2$.

10. The optical fiber (100) of claim 1, wherein

(i) a first trench alpha of a first low relative refractive index region (208) is in range between 1 and 3, and
(ii) a second trench alpha of a second low relative refractive index region (210) is in a range between 5 and 7.

11. An optical fiber ribbon (514a) **characterized in that**:

a plurality of optical fibers (516a-516n) such that each pair of adjacent optical fibers of the plurality of optical fibers (516a-516n) are at least one pair of adjacent optical fibers of the plurality of optical fibers (516a-516n) are intermittently connected along a length of an optical fiber of the pair of adjacent optical fibers,
wherein at least one optical fiber of the plurality of optical fibers (516a-516n) is defined by a relative refractive index profile (202) having two low relative refractive index regions (208, 210) such that a relative refractive index at an interface (212, 218) of the two low relative refractive index regions (208, 210) is in a range between 0 and -0.1%.

12. The optical fiber ribbon (514a) of claim 11, wherein each low relative refractive index region of the at least two low relative refractive index regions (208, 210) of the optical fiber (100) have a surface integral volume that differs by at least multiple of ten.

13. The optical fiber ribbon (514a) of claim 11, wherein each low relative refractive index region of the at least two low relative refractive index regions (208, 210) of the optical fiber (100) have a different minimum relative refractive index such that a relative refractive index of a first low refractive index region (208) is lower than a relative refractive index of a second low refractive index region (210).

14. An optical fiber (100) **characterized in that**:

a core region (102); and
a cladding (104), wherein the optical fiber (100) is defined by a relative refractive index profile (202) that varies from a center of the core region (102) to a periphery of the cladding (104) such that the relative refractive index profile;
wherein trench volume of a first low relative refractive index region (208) is at least 10 times less than trench volume of a second low relative refractive index region (210).

15. The optical fiber (100) of claim 14 , wherein the optical fiber (100) further comprising a relative refractive index at an interface (212, 218) of the at least two low relative refractive index regions (208, 210) is in a range between 0 and -0.1 %.

FIG. 1

FIG. 2

FIG. 3

400

```
                    ┌─────────────────────────────────────────┐  402
                    │           Prepare a core soot            │
                    └─────────────────────────────────────────┘
                                       │
                                       ▼
                    ┌─────────────────────────────────────────┐  404
                    │      Dope the core soot with fluorine    │
                    └─────────────────────────────────────────┘
                                       │
                                       ▼
                    ┌─────────────────────────────────────────┐  406
                    │        Dry and sinter the core soot      │
                    └─────────────────────────────────────────┘
                                       │
                                       ▼
                    ┌─────────────────────────────────────────┐  408
                    │     Draw a core rod from the core soot    │
                    └─────────────────────────────────────────┘
                                       │
                                       ▼
                    ┌─────────────────────────────────────────┐  410
                    │  Insert the core rod in a cylinder (clad tube)  │
                    └─────────────────────────────────────────┘
                                       │
                                       ▼
                    ┌─────────────────────────────────────────┐  412
                    │       Place the cylinder in a furnace     │
                    └─────────────────────────────────────────┘
```

FIG. 4

$$502 \left\{ \begin{matrix} 502a \\ = \\ 502n \end{matrix} \right. \quad 504 \left\{ \begin{matrix} 504a \\ = \\ 504n \end{matrix} \right. \quad 506 \left\{ \begin{matrix} 506a \\ = \\ 506n \end{matrix} \right. \quad 512 \left\{ \begin{matrix} 512a \\ = \\ 512n \end{matrix} \right. \quad 514 \left\{ \begin{matrix} 514a \\ = \\ 514n \end{matrix} \right. \quad 516 \left\{ \begin{matrix} 516a \\ = \\ 516n \end{matrix} \right.$$

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311043253
- US 8218929 B2
- WO 2021236352 A1
- US 11573368 B2